# DEMANDE DE BREVET EUROPEEN

(11) **EP 3 663 984 A1**
(43) Date de publication de la demande: **10.06.2020**
(21) Numéro de dépôt: 18306632.3
(22) Date de dépôt: 06.12.2018
(51) Int. Cl.: G06K 19/077, G06K 19/07

(54) **PROCEDE DE FABRICATION D'UNE CARTE A PUCE AVEC INTERCONNEXION DE MODULES**

(71) Demandeur: Thales Dis France SA, 92190 Meudon (FR)
(72) Inventeur: SEBAN, Frederick, 13881 GEMENOS CEDEX (FR); MERIDIANO, Jean-Luc, 13881 GEMENOS CEDEX (FR); BUYUKKALENDER, Arek, 13881 GEMENOS CEDEX (FR); COLOMBARD, Claude, 13881 GEMENOS CEDEX (FR); MENDEZ, Lucile, 13881 GEMENOS CEDEX (FR)
(74) Mandataire: Milharo, Emilien

(57) **Abrégé**

L'invention concerne un procédé de fabrication d'une carte à puce (1) radiofréquence, comprenant les étapes de :
- fourniture d'un corps (2) de carte comportant une première cavité (14) débouchant sur une première face (7) du corps de carte;
- insertion d'une première partie (3) d'un module M à antenne radiofréquence dans ladite première cavité,
caractérisé en ce qu'il comprend les étapes suivantes :
- fourniture dudit module M en au moins une première (3) et seconde (13) parties de module comprenant respectivement une première (L1) et seconde (L2) portions d'antenne;
- réalisation d'une seconde cavité (14) débouchant sur la face (8) opposée à ladite première face (7) en étant en regard au moins partiel de ladite première cavité (9) ;
- insertion de ladite seconde partie (13) de module dans ladite seconde cavité (14) et connexion électrique de ladite première portion d'antenne (L1) avec ladite seconde portion d'antenne (L2).

L'invention concerne également une carte correspondante obtenue par le procédé.

## Description

### Domaine de l'invention.

L'invention concerne le domaine des cartes à puce comportant des modules à puce de circuit intégré. Le module est de préférence du type radiofréquence.

Elle vise en particulier la fabrication de carte à puce comportant une ou plusieurs feuilles (ou plaque) métallique(s) ; Toutefois, l'invention peut s'appliquer à des cartes sans feuille ou plaque métallique en matériaux divers, tels que du bois, du métal et/ou du plastique.

Les cartes à puce peuvent être du type hybride (contacts et sans-contact) ou purement sans-contact (sans bornier de contacts électriques 5) ou simplement à plages de contacts électriques.

Les cartes à puce peuvent avoir un module de carte à puce comportant un transpondeur radiofréquence muni la puce et l'antenne portées sur un substrat isolant du module. Les modules de carte à puce radiofréquence sont généralement encartés dans une cavité du corps de carte. Ils peuvent aussi connecter une antenne logée dans le corps de carte via des éléments d'interconnexion électriques, reliant des plages (ou portions) terminales de l'antenne à des zones de connexion de la puce placées sur le module.

Un module radiofréquence de carte à puce peut être couplé avec une antenne passive (relais, ou d'amplification ou également appelée « booster) logée dans le corps de carte.

L'invention vise plus particulièrement les cartes bancaires ou de paiement, métalliques ou non.

### Art antérieur

Le brevet FR 2743649 décrit un module de carte à puce à antenne et /ou plages de contact pouvant être incorporé dans une cavité de corps de carte ou pouvant former une étiquette électronique RFID.

Par ailleurs, on connait également des dispositifs radiofréquences hybrides, tels que des cartes à interface duale, contacts et sans-contact, comportant un module de carte à puce à contacts incorporé dans un corps de carte et connecté à une antenne logée dans le corps de carte.

Par ailleurs, il existe des cartes bancaires comportant des éléments métalliques disposés sous forme d'insert (inlay en anglais) à l'intérieur le corps de carte en matière plastique ou en surface externe du corps de carte tel de l'aluminium, du titane, de l'or. Le métal procure une sensation de lourdeur de la carte qui est très appréciée par les utilisateurs. Il donne aussi un aspect esthétique visible qui en fait un produit haut de gamme pour privilégiés.

On assiste actuellement à une demande accrue du public pour des cartes en matière métallique et/ou lourde. Or, le métal fait obstacle à la propagation des ondes électromagnétiques nécessaire pour une bonne communication.

### Problème technique.

L'invention vise à résoudre les inconvénients précités ou objectifs ci-dessous.

L'invention a pour objectif un procédé de fabrication de cartes à puce pour réaliser toute sorte de carte à puce de manière aisée et économique, avec ou sans métal dans le corps de carte.

En particulier, l'invention vise une structure de module à puce électronique pour carte à puce qui permette d'avoir de bonnes performances radiofréquences RF carte dans toutes les directions, même si la carte contient un maximum de métal à l'intérieur ou au-dessus ou sur le bord ou périphérie de la carte.

La carte doit également avoir une structure satisfaisant les des normes ISO concernant les contraintes de tenue mécanique ou autres tests notamment de durabilité dans le temps.

### Résumé de l'invention.

L'invention propose une structure de module et de carte qui permette de bonnes performances radiofréquences quel que soit la matière utilisé pour le corps de carte et un procédé d'assemblage aisé du module avec le corps de carte.

Elle propose un procédé qui permette cette fabrication.

L'invention consiste selon un aspect préféré à augmenter au maximum l'inductance de l'antenne de module lui-même dans un petit espace afin de remédier à la perturbation du métal dans le corps de carte indépendamment de sa quantité dans le corps de carte. En l'absence de métal, l'invention apporte notamment une simplicité d'assemblage de module au corps de carte qui peut s'étendre aux cartes traditionnelles (sans métal).

L'invention prévoit de réaliser le module en deux parties principales qui se connectent électriquement ultérieurement (par contact ou par soudure, ou connexion ohmique ou connexion capacitive). Le module comprend de préférence, une première partie comportant une puce radiofréquence reliée à une première portion antenne et une seconde partie comportant une seconde portion d'antenne. Le cas échéant, chaque portion d'antenne et /ou la puce peut être supportée par un substrat isolant (diélectrique).

L'encartage (ou insertion) de deux parties ou deux circuit imprimés (lead frame en anglais) dans le corps de carte contenant du plastique et/ou du métal, peut s'effectuer par une face avant de la carte pour la première partie (ou premier module) et par la face arrière de la carte directement opposée et en regard du premier afin de faciliter la connexion entre les deux.

Cela peut impliquer de réaliser une cavité à l'emplacement de chaque sous-partie de module, tout en créant un plan respectif pour la réception des sous-parties.

De préférence, chaque cavité 9, 14 peut être conformée de manière à former respectivement un plan P1 et P3 en regard l'un de l'autre.

Une première étape peut consister à insérer une portion d'inductance supplémentaire dans la cavité puis ensuite à insérer l'antenne du module afin d'avoir les deux portions d'antenne connectées ensemble, notamment en série, pour augmenter l'inductance générale (L). Des éléments conducteurs d'interconnexion (tels que de la colle conductrice argent ou tout autre élément d'interconnexion) sont éventuellement introduits entre les deux parties pour les connecter.

Ainsi, l'invention propose un module de carte à puce qui convient à toute carte à puce (métallique ou non) et qui s'affranchit de toute perturbation métallique qui serait éventuellement présente dans le corps de carte. Cela permet notamment de bien rationaliser la fabrication avec un seul type de module indépendamment du caractère métallique ou non métallique de la carte.

A cet effet, l'invention a pour objet un procédé de fabrication d'une carte à puce, comprenant les étapes de :
- fourniture d'un corps de carte comportant une première cavité débouchant sur une première face du corps de carte;
- insertion d'une première partie d'un module à puce dans ladite première cavité ; Le procédé se caractérise en ce qu'il comprend les étapes suivantes :
- fourniture dudit module en au moins une première et seconde sous-parties de module comprenant respectivement une première et seconde portions d'antenne (ou autre circuit électrique);
- réalisation d'une seconde cavité débouchant sur la face opposée à ladite première face en étant en regard au moins partiel de ladite première cavité;
- insertion de ladite seconde sous-partie de module dans ladite seconde cavité et connexion électrique de ladite première portion d'antenne (ou autre circuit électrique) avec ladite seconde portion d'antenne (ou autre portion de circuit électrique).

On observe que l'invention peut prévoir de remplacer ou compléter l'antenne L1, L2 par tout circuit électrique et/ou électronique inséré au niveau du module (par exemple, une seconde puce, une batterie, des super capacités, un capteur d'empreinte placé en face arrière de la carte, une résistance, une ou plusieurs capacité(s) d'accord en fréquence...

Selon d'autres caractéristiques :
- Les première et seconde cavités peuvent être réalisées d'un côté et de l'autre opposé d'une plaque métallique ; La plaque métallique peut s'étendre d'un bord à un bord opposé de la carte et former au moins une couche principale de la carte ;
- Chaque cavité peut être conformée de manière à former respectivement un premier et second plans en regard l'un de l'autre ;
- Les premier et second plans sont formés par au moins deux ou trois excroissances ou dents s'étendant vers le centre de la cavité et formant chacune un point d'appui d'au moins un module ;
- Les premier et second plans peuvent comporter des perforations, des évidements, des fentes radiales ou des encoches traversant les plans et débouchant dans les deux cavités ;
- Les premier et second plans peuvent comporter des dents orientées vers le centre de la cavité.
- Le corps (ou un insert contenu dans le corps), peut comporter ou peut être formé d'une plaque en métal.
- Le corps (ou un insert contenu dans le corps) peut comprendre majoritairement du métal en proportion du poids total de la carte (ou même du volume total de la carte). Par exemple plus de 70 % ou 80 %, voire plus de 95 % du poids total de la carte.

L'invention a également pour objet une carte à puce comprenant un corps de carte comportant :
- une première cavité débouchant sur une première face du corps de carte;
- une première partie d'un module à puce inséré dans ladite première cavité ;
caractérisée en ce que le module est configuré en au moins une première et seconde parties de module comprenant respectivement une première et seconde portions d'antenne (ou autre premier et second circuit électrique);
- une seconde cavité débouchant sur la face opposée à ladite première face en étant en regard au moins partiel de ladite première cavité;
- ladite seconde partie de module est insérée dans ladite seconde cavité et ladite première portion d'antenne (ou autre premier circuit électrique) est connectée électriquement avec ladite seconde portion d'antenne (ou autre second circuit électrique).

### Descriptif des figures :

- La figure 1A illustre une carte en cours de montage dans un corps de carte avec le module M et le plan de cavité P1, P3 réalisé conformément au mode préféré de l'invention ;
- La figure 1B illustre une carte en cours de montage dans un corps de carte avec le module M réalisé (configuré) conformément au mode préféré e l'invention, mais avec un plan de cavité P1 ou P3 réalisé selon une seconde variante de mise en oeuvre différente ;
- La figure 1C illustre un plan de cavité P1 ou P3 configuré selon une troisième variante de mise en oeuvre ;
- La figure 2 illustre schématiquement une vue en coupe longitudinale A-A de la carte de la figure 1 après assemblage et connexion;
- La figure 3 illustre schématiquement les sous-parties 3 et 13 du module M en cours de rapprochement physique, pour un assemblage et connexion électrique au niveau de leurs plots d'interconnexion T1-T4 (conformément à la figure 2);
- La figure 4 illustre schématiquement le circuit électrique obtenu grâce à l'assemblage et connexions électriques des sous-modules 3 et 13, réalisés conformément au mode préféré de l'invention.

### Description.

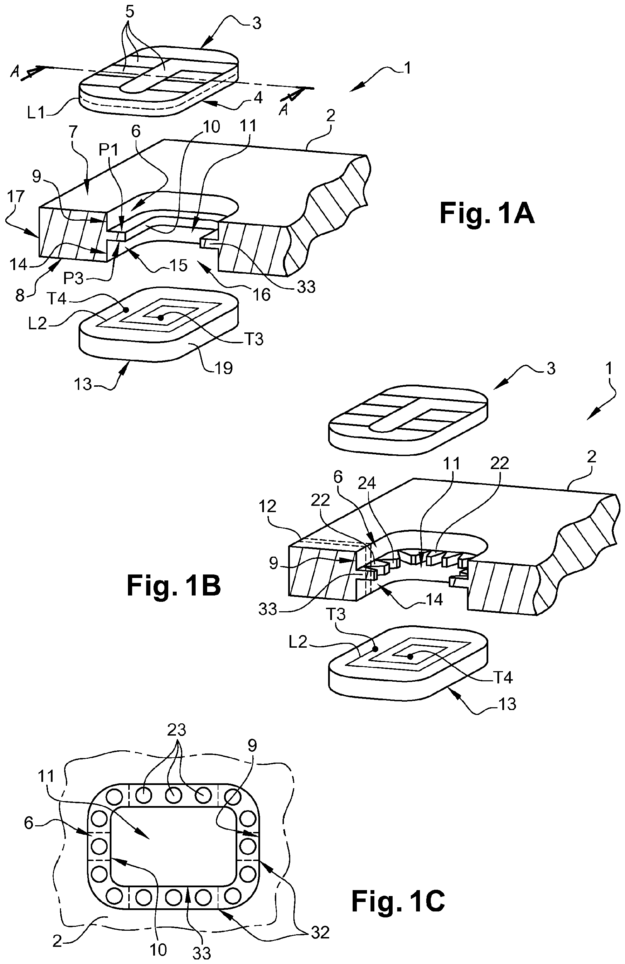

A la figure 1, est illustrée une première étape du procédé préféré de fabrication d'une carte à puce radiofréquence comprenant un corps de carte.

Selon cette première étape, l'invention prévoit la fourniture (ou réalisation d'un corps (ou insert) 2 de carte à puce comportant une première cavité 6 débouchant sur une première face 7 du corps de carte.

La cavité 6 définit en principe un plan P1 situé à un premier niveau de cavité. C'est en principe sur ce plan P1 qu'est fixé un module 3 de carte à puce sans-contact. Ce plan P1 comporte un évidement 11 sensiblement central dans la cavité de manière à y loger une puce de circuit intégré notamment sans-contact ou à contacts et éventuellement un enrobage isolant de protection de la puce et/ou de ses connexions électriques. La cavité 6 définit un bord ou une paroi interne de cavité 9 et l'évidement central 11 sous le plan P1 définit une paroi ou bord interne 10, respectivement perpendiculaire à une des faces principales 7 du corps de carte.

L'élément de corps de carte (ou insert) 2 peut être de toute matière connue utilisée dans la carte à puce tel que par exemple en plastique, PVC, PET, PC, bois. De préférence, la matière du corps ou de l'insert est principalement en métal massif ou en majorité à plus de 70 % en volume en métal (pleine masse ou sous forme de particules ou billes assemblées par un liant ou une matrice polymère).

Le métal peut être choisi parmi une matière métallique parmi la plus lourde (en masse volumique) comme le tungstène, l'or, l'argent, l'acier mais aussi parmi les plus légers comme l'aluminium. Le métal peut être sous différentes formes notamment en une plaque ou au moins une feuille(s) ou lame(s) de métal assemblées superposées. Il peut se présenter sous forme de fils métallique, granulés, billes, poudre de métal dans une matrice polymère,

Le procédé selon ce mode préféré, comporte aussi une étape d'insertion d'une première partie 3 d'un module à antenne radiofréquence dans ladite première cavité.

La partie 2, quand elle est métallique, peut comporter ou présenter, de préférence, une découpe latérale (fente ou échancrure 12 (fig. 1B) concave dépourvue de métal sur un des bords latéraux du métal). L'échancrure peut être assez large et correspondre à un emplacement de module radiofréquence complet ou à une cavité complète (ex. plans P1 et P2 de cavité) de réception d'un module radiofréquence. L'échancrure (ou une fente 12) peut s'étendre jusqu'à un des bords périphérique du corps de carte à partir d'une cavité 11 de module, notamment un des bords le plus proche de l'emplacement de module. Cette fente 12 peut améliorer les performances radiofréquences.

Le mode préféré de l'invention prévoit l'insertion d'une première partie 3 d'un module M à antenne radiofréquence dans la première cavité 6 ; Eventuellement, le module M peut s'étendre également au moins en partie dans l'évidement central 11 via sa puce électronique et/ou son enrobage.

Le module peut être à contacts électriques 5 affleurant en surface 7 du corps de carte. L'échancrure 12 peut être plus ou moins fine et proche d'un bord de la carte. Le module M (3, 13) peut être de type hybride (contacts 5 et radiofréquence L1, L2 ou simplement radiofréquence L1, L2 ou simplement à contacts 5).

L'échancrure ou fente 12 élargie peut permettre de faciliter l'usinage de la cavité de réception du module, ou d'éviter des perturbations dans la propagation de champ électromagnétique.

L'inlay (insert) métal 2 s'étend de préférence sensiblement autour ou en périphérie du module (ou au moins sur 3 ou 4 côtés à 90 degrés du module). Cela permet notamment de couvrir le maximum de surface du corps de carte et apporter un maximum de poids.

L'insert ou carte 1 peut comprendre une ouverture 11 traversant le métal et correspondant à l'emplacement du module complet M.

Le module radiofréquence 3 de carte à puce peut comprendre de manière connue, par exemple, une puce radiofréquence 18 et une antenne de communication L1 reliée à la puce disposée sur un premier substrat diélectrique 4.

L'insert 2 en métal peut comprendre des perforations ou des ouvertures (traversantes ou non et non illustrées) pour accrocher des feuilles de recouvrement éventuelles entres-elles ou pour s'accrocher mécaniquement au métal et éviter une délamination. Le métal peut être sous forme de grille ou de feuille perforée de préférence partout ou au moins en proche périphérie du corps de carte pour mieux lier les feuilles de recouvrement.

L'élément 2 de corps de carte notamment en métal, peut être recouvert de part et d'autre de ses faces principales par une couche de matière plastique encollée ou laminer de façon à maintenir l'assemblage du module avec le corps de carte. Les feuilles polymères de recouvrement peuvent ou non s'étendre au-delà du bord de l'insert et les enfermer.

De préférence, le métal s'étend jusqu'au bord périphérique du corps de carte au moins sur un côté.
Le métal peut être légèrement en retrait du bord périphérique, notamment pour éviter des courts-circuits. Par exemple, le bord peut comprendre un isolant tel l'alumine pour un corps en aluminium ou autre oxyde pour d'autres métaux. Le métal peut comprendre une couche fine isolante de moins de 0,5 ou un millimètre en périphérie.

De préférence, le métal ou la couche 2 majoritairement en métal s'étend sensiblement jusqu'au moins un bord périphérique 17 (ou chant) de la carte.

L'élément (ou couche) de corps de carte peut comprendre (ou être constituée par) tout matériau plastique notamment à base de polychlorure de vinyle (PVC), d'un polyéthylène téréphtalate (PET), d'un polycarbonate (PC), d'un polyéthylène téréphtalate glycol (PETG), d'un acrylonitrile butadiène styrène (ABS).

Selon une caractéristique du mode préféré, le procédé comprend l'étape a) ci-après de fourniture du module M en au moins une première 3 et seconde 13 sous-parties de module, comprenant respectivement une première L1 et seconde L2 portions d'antenne;

Les antennes peuvent être de tout type, notamment en forme de spirale conforme au standard ISO/IEC 14443 ou de type UHF.

Dans l'exemple, la partie supérieure 3 du module peut comprendre une antenne spiralée L1 notamment en cuivre gravée sur un premier substrat diélectrique 4 tel que du polyimide. L'antenne peut être connectée à une puce radiofréquence 18 portée par la première partie 3. L'antenne L1 comporte une portion terminale d'interconnexion T1 libre (l'autre étant connectée à la puce 18), et la puce 18 comporte une portion terminale d'interconnexion libre T2. Ces portions terminales T1 et T2 sont destinées à connecter électriquement un composant placé dans une sous-partie 13 du module M.

Dans l'exemple, le composant est une bobine ou spirale L2 disposée sur un second substrat 19. Le second substrat 19 peut être ou non de la même nature que le premier substrat 4.
Le composant disposé sur cette seconde sous-partie 13 peut être une ou plusieurs capacité(s), une diode lumineuse, un buzzer un circuit intégré, un microcontrôleur ou microprocesseur ou tout composant électronique et/ou électrique. Le composant peut être une batterie, une pile, un capteur biométrique, notamment d'empreinte digitale...

La sous-partie 13 comporte un ou des plots d'interconnexion T3, T4 pour interconnecter un circuit de la première sous-partie de module 3.

Ici dans l'exemple, le composant est une seconde portion d'antenne L2 avec deux portions terminales d'interconnexion T3 et T4 libres. Ces portions terminales T1 et T2 sont destinées à connecter respectivement les plots T1 et T2 comme expliqué ultérieurement. T3 et T4 sont donc agencées de manière à pouvoir interconnecter les plots T1 et T2 respectivement.

Selon une autre caractéristique du mode préféré, le procédé comporte également, une étape b) de réalisation d'une seconde cavité (9, 14) débouchant sur la face opposée 8 à la première face 7 en étant en regard au moins partiel de la première cavité 6;

De préférence, les première et seconde cavités 9, 12 sont réalisées d'un côté et de l'autre opposé d'une plaque métallique 2.

Dans l'exemple, la cavité 14 est réalisée par usinage, fraisage ou perçage mais peut être réalisée par tout moyen connu tel que moulage, en même temps que l'élément de corps 2, etc.
La cavité 14 définit un bord interne 15 un fond de cavité définissant un second plan P3 (équivalent et opposé au plan P1) de la première cavité 6.
Elle définit un évidement 16 central dans la cavité 14 à travers le plan P3.

Les cavités 9, 14 sont conformées de préférence de manière à former respectivement un plan P1 et P3 en regard l'un de l'autre. Toutefois, ils peuvent être décalés ou excentrés l'un par rapport à l'autre.

De préférence, pour permettre ou faciliter au moins la connexion électrique et aussi pour des performances radiofréquences les cavités sont de préférence, le plus possible en regard l'une de l'autre.

Ainsi, la double-cavité traversante 6-15 présente une configuration avec une membrane évidée au centre ou un épaulement interne qui sert de plan de support P1, P3 respectivement à chaque sous-partie 3, 13 du module M.

Chaque plan P1 et P3 peut être formé par au moins deux ou trois excroissances ou dents 22 s'étendant vers le centre de la cavité et formant chacune un point d'appui d'au moins un module 3, 13.

Les plans P1 et P3 peuvent comportent des perforations, des évidements 23 ou des encoches traversant les plans P1, P3 et débouchant dans les deux cavités 9, 14 de manière à permettre aux antenne de mieux rayonner mais aussi pour accrocher ou ancrer les sous-parties de module à travers les trous 23 à l'aide d'un adhésif qui adhère aux deux sous-parties de module.

La membrane 33, quant à elle, en métal, peut comporter des découpes ou perforations traversant la membrane de manière à présenter le moins de métal possible s'étendant radialement dans la cavité et qui pourrait faire barrière au champ électromagnétique. La cavité peut comporter des dentelures 22 ancrées dans la paroi de la cavité et orientées vers le centre ou une médiane de la cavité.

Selon une alternative, la membrane 33 peut être formée par un circlip intérieur élastique placé dans une rainure d'accueil correspondant au circlip à la place de l'épaulement ou membrane délimitée entre les deux plans P1 et P3.

Avantageusement, le circlip est en matière distincte du métal, telle que du plastique.
La sous-partie 13 peut être configurée de toute manière pour s'emboiter dans la cavité 14 et s'assembler avec la première sous-partie 3.
La sous-partie de module 3 (ou 13) peut avoir des encoches ou des protubérantes pour pouvoir s'encliqueter dans des éléments correspondant dans la cavité 9 et/ou 14 de manière à se maintenir en place. Par exemple, des flèches ou tiges d'ancrage avec des portions de glissement inclinées peuvent s'étendre perpendiculairement à la surface du module pour venir s'ancrer sur le plan P3 (ou P1).

Tout moyen mécanique non démontable connu de l'homme de l'art peut être envisagé pour maintenir une sous-partie du module M (3, 13) en place.
Il est également possible d'encarter (ou insérer) chaque sous-partie de manière connue avec des points de colle ou une collerette (ou anneau) adhésive déposé sur les plans de cavité P1 et/ou P3.

Les sous-parties 3, 13 peuvent aussi s'assembler entre elles par tout moyen d'accrochage mécanique ou adhésif sans pour autant adhérer ou accrocher un des plans de cavité P1 et/ou P3.

Selon une autre caractéristique c) de ce mode préféré, le procédé prévoit l'insertion de la seconde partie 13 ainsi configurée de module dans la seconde cavité 15, 14. Ensuite, s'effectue notamment consécutivement à l'insertion, la connexion électrique de la première portion de circuit électrique ou électronique, notamment d'antenne L1, avec la seconde portion d'un autre élément électrique ou électronique, notamment une antenne L2 spiralée ou de type UHF. La connexion électrique peut être ohmique, par contact ou soudure ou par connexion capacitive.

De manière avantageuse, les sous-parties 3, 13 de module M peuvent être assemblées et connectées électriquement en une seule opération d'insertion dans les cavités par une colle conductrice notamment anisotropique sous forme de film ACF ou de pâte ACP placée notamment entre les plots d'interconnexion T1 et T3 d'un part T2 et T4 d'autre part.

De préférence, on réalise chaque antenne L1, L2 par tout procédé connu tel que gravure de cuivre, incrustation de fil, jet de matière, etc., sur le substrat 4 et/ou 19.

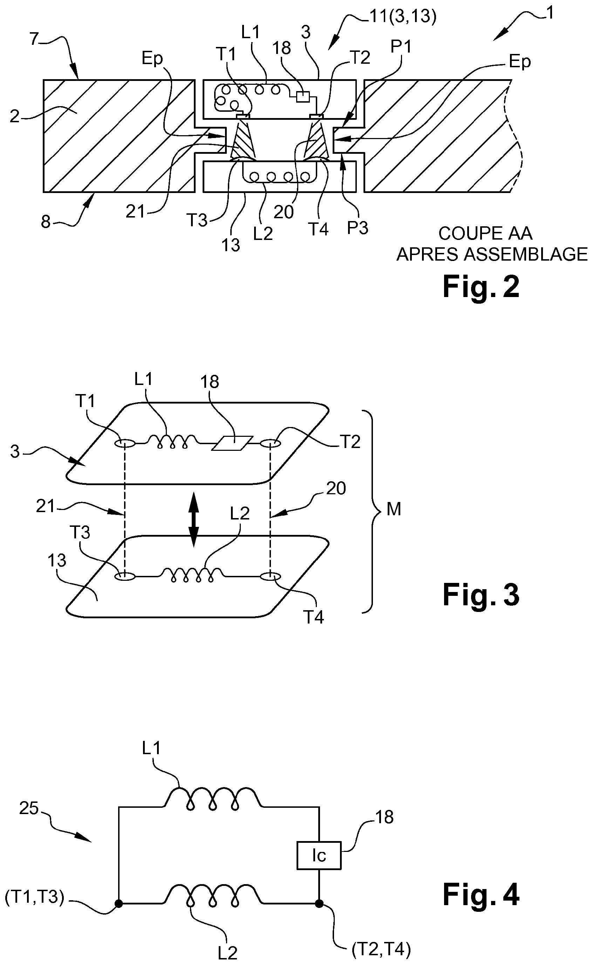

A la figure 2, est illustrée la carte 1 obtenue selon le mode de réalisation préféré du procédé. Les sous-parties 3 et 13 sont insérées dans leur cavité respective en étant insérée respectivement via les faces opposées 7 et 8 de la carte. Elles sont fixées par deux adhésifs conducteur 20, 21 ou colle conductrice, ou film anisotropique (ACF), ou pâte à braser, etc... disposés respectivement entres les plots T1 et T3 d'une part et T2 et T4 d'autre part (représentés schématiquement par des troncs de cônes).

L'épaisseur de la membrane 33 sur toutes les figures peut être par exemple comprise entre 50 µm et 200 µm.

Les sous-parties ont de préférence sensiblement les mêmes encombrements ou dimensions en surface à quelques millimètres près.

Au moins une des sous-parties 3 et 13 peut être amovible par rapport au corps de carte. Elles peuvent être aimantées pour se fixer l'une à l'autre mutuellement ou se fixer au corps en métal.
Au moins la sous-partie 13 peut comprendre un aimant permanent pour attirer la puce et/ou les plages de contact 5 de la sous-partie de module 3.

Les sous-parties peuvent avoir un montage de type à vis ou à baïonnette avec ou sans colle de maintien en place dans la vis ou baïonnette.
Ce montage permet de mieux maintenir en place le module et empêcher ou rendre difficile une tentative ou démontage éventuelle pour les produits anti-fraude.

Les sous-parties 3 et 13 peuvent être appariées ensemble quel que soit l'assemblage retenu (aimant ou autre), par exemple, en partageant un secret ou une caractéristique ou paramètre physique et en mettant en oeuvre une authentification mutuelle avant fonctionnement ou utilisation.

La sous-partie 13 peut comprendre un capteur d'empreinte qui autorise la puce 18 à fonctionner que si l'empreinte est validée dans une puce 18 disposée dans la sous-partie 3. Le capteur d'empreinte formé dans la sous-partie 13 peut déboucher en surface inférieure de la carte à travers une ouverture dans le corps de carte avec ou sans feuille de couverture.

Le corps de carte ainsi obtenu avec une feuille ou plaque (2) métallique (ou non). Il peut être assemblé le cas échéant, à une ou plusieurs feuilles polymère de couverture ou de décoration notamment par collage.
Ainsi le sous-module 13 peut être recouvert et masqué grâce à une feuille (overlay) polymère de couverture recouvrant le corps 2. Cette feuille permet aussi de renforcer une indémontable du module.

La figure 3 illustre schématiquement les sous-modules 3 et 13 en cours de rapprochement pour un assemblage et connexion électrique au niveau de leurs plots T1-T4 d'interconnexion à l'aide de tout moyen connu d'interconnexion 20, 21.

Le circuit électrique résultant de l'assemblage des sous-modules 3 et 13 de l'invention est un transpondeur 25 radiofréquences comportant une puce radiofréquence reliée à au moins une inductance L1 complétée ou augmentée d'une seconde inductance L2.
Les sous-couches peuvent comprendre d'autres éléments de circuit électriques et/ou électroniques tels qu'une capacité d'accord en fréquence, sous forme de puce ou une plaque disposée notamment de part et d'autre du substrat diélectrique 19 ou sur le substrat 4.

La figure 4 illustre schématiquement le circuit électrique résultant grâce à l'assemblage des sous-modules 3 et 13 de l'invention et formant un transpondeur 25 radiofréquence.

Ici, l'antenne L1 du sous-module 3 est connectée en série à une antenne complémentaire L2 située dans le sous-module 13. Cependant, d'autres montages (ou connexions) électriques peuvent être envisagés comme un montage en parallèle des antennes (ou bobines) L1, L2. Une capacité d'accord en fréquence peut être incluse dans la puce 18 ou sous forme de plaque de condensateur dans les substrats en parallèle ou en série.

Selon une caractéristique avantageuse, le module peut être avec des plages de contact ajourées ou perforées pour laisser passer du champ électromagnétique et/ou avec des fentes radiales de la membrane 33.

Chaque sous-partie de module 3, 13 peut présenter une absence de métal ou du métal ajouré sur le bord périphérique du module pour faciliter la circulation de champ électromagnétique.

D'une manière générale sur tous les exemples, les interconnexions de l'inductance (ou antenne supplémentaire 13 ou tout autre circuit électrique) avec l'antenne 3 peut être réalisée par au moins une capacité. Cette dernière peut être placée notamment entre les points T1 et T3 et/ou T2 et T4 dont l'interconnexion ne serait plus ohmique mais capacitive.

## Revendications

1. Procédé de fabrication d'une carte à puce (1) radiofréquence, ledit procédé comprenant les étapes de :
- fourniture d'un corps (2) de carte comportant une première cavité (14) débouchant sur une première face (7) du corps de carte;
- insertion d'une première partie (3) d'un module M à antenne radiofréquence dans ladite première cavité,
**caractérisé en ce qu'**il comprend les étapes suivantes :
- fourniture dudit module M en au moins une première (3) et seconde (13) parties de module comprenant respectivement une première (L1) et seconde (L2) portions d'antenne;
- réalisation d'une seconde cavité (14) débouchant sur la face (8) opposée à ladite première face (7) en étant en regard au moins partiel de ladite première cavité (9) ;
- insertion de ladite seconde partie (13) de module dans ladite seconde cavité (14) et connexion électrique de ladite première portion d'antenne (L1) avec ladite seconde portion d'antenne (L2).

2. Procédé selon la revendication précédente, **caractérisé en ce que** lesdites première et seconde cavités (9, 14) sont réalisées d'un côté et de l'autre opposé du corps.

3. Procédé selon l'une des revendications précédentes, **caractérisé en ce que** le corps comporte ou est formé d'une plaque en métal.

4. Procédé selon l'une des revendications précédentes, **caractérisé en ce que** le corps comprend majoritairement du métal en proportion du poids total de la carte.

5. Procédé selon l'une des revendications précédentes, **caractérisé en ce que** chaque cavité (9, 14) est configurée de manière à former respectivement un plan (P1) et plan (P3) en regard l'un de l'autre.

6. Procédé selon la revendication 5, **caractérisé en ce que** les premier plan P1 et second plan P3 sont formés par au moins deux excroissances ou dents 22 s'étendant vers le centre de la cavité et formant chacune un point d'appui d'au moins un module (3, 13).

7. Procédé selon la revendication 5, **caractérisé en ce que** les premier P1 et second plans P3 comportent des perforations, des évidements (23) ou des encoches (24) ou des fentes (32) traversant les plans et débouchant dans les deux cavités (9, 14) .

8. Carte à puce comprenant un corps de carte comportant :
- une première cavité (9) débouchant sur une première face (7) du corps de carte (2) ;
- une première partie (3) d'un module (M) à puce inséré dans ladite première cavité (9) ;
**caractérisée en ce que** le module (M) est configuré en au moins une première (3) et seconde (13) parties de module comprenant respectivement une première (L1) et seconde (L2) portions d'antenne (ou autre premier et second circuit électrique);
- une seconde cavité (14) débouchant sur la face (8) opposée à ladite première face (7) en étant en regard au moins partiel de ladite première cavité (9);
- ladite seconde partie (13) de module est insérée dans ladite seconde cavité (14) et de ladite première portion d'antenne (L1) (ou autre premier circuit électrique) est connectée électriquement (20, 21) avec ladite seconde portion d'antenne (L2) (ou autre second circuit électrique).

9. Carte selon la revendication précédente, **caractérisée en ce que** lesdites première et seconde cavités (9, 14) sont réalisées d'un côté et de l'autre opposé d'une feuille ou plaque métallique (2).

10. Carte selon la revendication précédente, **caractérisée en ce que** ladite feuille ou plaque métallique (2) est assemblée à une ou plusieurs feuilles polymère de couverture ou de décoration.

11. Carte selon l'une des revendications précédentes, **caractérisée en ce que** la sous-partie de module (13) comporte un capteur biométrique.
